Europäisches Patentamt

(19) European Patent Office

Office européen des brevets

(11) Publication number: **0 095 258**

**B1**

(12) **EUROPEAN PATENT SPECIFICATION**

(45) Date of publication of patent specification: **04.06.86**

(51) Int. Cl.⁴: **F 16 D 43/28,** F 16 D 43/284, F 16 D 25/063

(21) Application number: **83302402.9**

(22) Date of filing: **28.04.83**

(54) **Centrifugally responsive hydraulically applied friction clutch.**

(30) Priority: **24.05.82 US 381434**

(43) Date of publication of application:
**30.11.83 Bulletin 83/48**

(45) Publication of the grant of the patent:
**04.06.86 Bulletin 86/23**

(84) Designated Contracting States:
**DE FR GB IT**

(56) References cited:
**DE-B-1 193 744**
**GB-A-1 041 875**
**GB-A-1 392 264**
**GB-A-1 474 996**
**US-A-3 819 020**
**US-A-4 147 245**

(73) Proprietor: **GENERAL MOTORS CORPORATION**
**General Motors Building 3044 West Grand Boulevard**
**Detroit Michigan 48202 (US)**

(72) Inventor: **Koivunen, Erkki Antero**
**15560 Westbrooke**
**Livonia Michigan 48197 (US)**

(74) Representative: **Breakwell, John Neil Bower et al**
**GM Patent Section Luton Office (F6) P.O. Box No. 3 Kimpton Road**
**Luton Beds. LU2 0SY (GB)**

# Description

This invention relates to a centrifugally responsive hydraulically applied friction clutch as specified in the preamble of claim 1, for example as disclosed in GB—A—1 474 996.

In most prior-art centrifugally controlled hydraulically applied clutches, the minimum engagement speed is controlled by a centrifugal ball valve or by a valve operated on by a rotating fly-weight as balanced by a clutch return spring. The torque capacity of the clutch then follows a speed-pressure relationship which is determined by the engagement valve in one or more additional centrifugally responsive valves. These clutches are operated at the same engagement speed and along the same speed-torque relationship curve during the entire time of clutch engagement, and their mode of operation cannot be changed to accommodate various operating conditions.

The present invention is concerned with a centrifugally responsive hydraulically applied friction clutch having a plurality of selectively established operating curves.

For this purpose, a centrifugally responsive hydraulically applied friction clutch in accordance with the present invention is characterised by the features specified in the characterising portion of claim 1.

In such a centrifugally responsive hydraulically applied friction clutch, also, the use of counterbalancing feed and apply chambers permits controlled engagement of the friction clutch for various engine operating conditions.

In a specific form of a centrifugally responsive hydraulically applied friction clutch in accordance with the present invention, the clutch includes a plurality of centrifugally responsive valves to determine the engagement pressure available within a clutch apply chamber for clutch-engagement movement of a clutch apply piston, and additionally a feed chamber is connected to a variable-pressure source and provides for the clutch apply piston an effective operating area in the sense of clutch disengagement.

The fluid which is effective in the apply chamber must pass through the feed chamber and a restriction prior to reaching the apply chamber. Since the fluid in the apply chamber is exhausted through the centrifugally responsive valves, the apply pressure involves a feed and bleed function which is always maintained at a level equal to or less than the pressure level in the feed chamber. At zero or low input speeds, the clutch is disengaged by pressure in the feed chamber, and substantially no pressure is generated within the apply chamber. The minimum pressure level in the apply chamber is determined by the minimum pressure setting of the centrifugal valves. As clutch input speed increases, the restriction provided by the centrifugal exhaust control valves will increase, and therefore the clutch apply pressure will increase. The apply chamber has a greater effective area than the feed chamber, such that a lower pressure in the apply chamber can overcome the disengaging force created in the feed chamber. This differential area is important in establishing the minimum engagement speeds, and can be designed to be compatible with various prime movers. The feed pressure level can be varied within a given system, by means of a selectively operable variable pressure regulator associated with the source of pressure fluid, to also affect the minimum speed at which clutch engagement occurs.

Fluid streams in which at least two centrifugally responsive valve means are arranged to control or otherwise provide a fluid pressure and speed relationship for a hydraulically applied friction clutch are disclosed for example in GB—A—1 041 875, US—A—3 819 020 and DE—B—1 193 744.

In the drawings:

Figure 1 is a fragmentary sectional elevational view of a friction clutch in accordance with the present invention, including a diagrammatic representation of a hydraulic supply circuit;

Figure 2 is a fragmentary sectional elevational view showing a portion of the clutch of Figure 1 angularly displaced from the view of Figure 1;

Figure 3 is a graph depicting operating characteristics of the clutch and a prime mover; and

Figure 4 is a graph depicting the pressure and speed relationships of a pair of exhaust control valves shown in Figures 1 and 2.

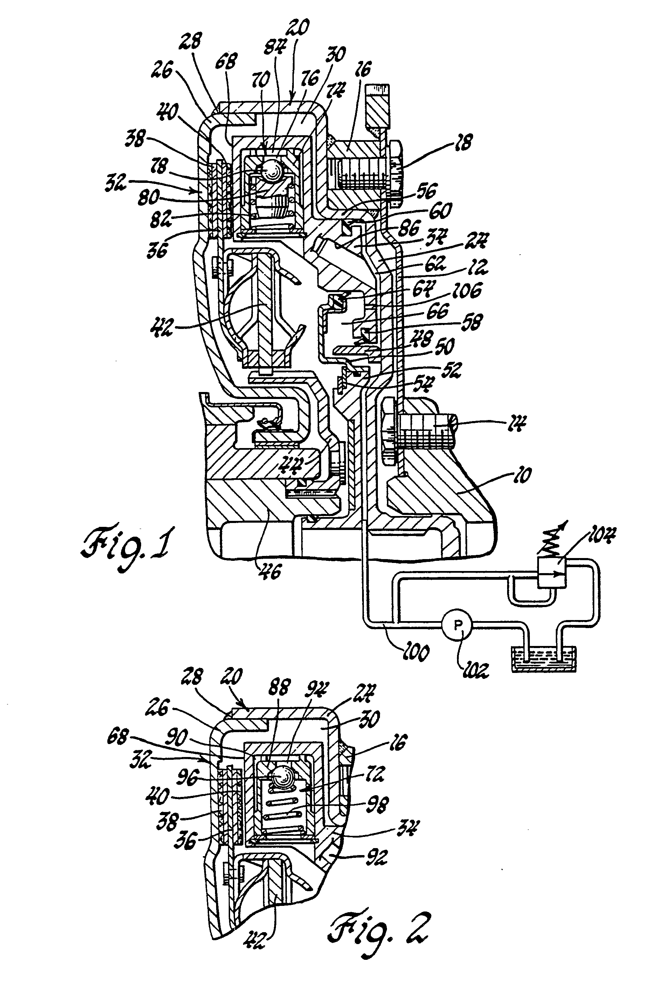

In the drawings, Figure 1 shows an engine crankshaft 10 which is a component of a conventional internal combustion engine and is drivingly connected to a flex plate 12 by a plurality of fasteners 14. The flex plate 12 is secured to a plurality of lugs such as 16 by respective fasteners 18.

The lug 16 is secured to a clutch housing 20. The clutch housing 20 includes a pair of annular sheet metal members 24 and 26 which are secured together at 28 to form an annular (toroidal) space 30 in which is disposed a friction clutch 32 and an apply piston 34. The friction clutch 32 includes a plate member 36 having annular friction faces 38 and 40 bonded thereto. The plate member 36 is connected by way of a torsional vibration damper 42 to a clutch hub 44, which in turn is splined to a clutch output shaft 46.

The clutch housing 20 includes an annular sleeve member 48 that is secured to an annular sheet metal member 24 and extends into the annular space 30. The clutch housing 20 also has an annular wall member 50 positioned on a hub portion 52 by means of a retainer ring assembly 54. The hub portion 52 may be either secured to or formed integrally with the annular member 24. The annular member 24 has an axially extending wall portion 56 which slidably supports the apply piston 34. A pair of annular lip seals 58 and 60 are disposed in respective grooves on the apply piston 34, and co-operate with the sleeve member 48 and the wall portion 56 to establish the diametral limits of an apply chamber 62 formed between the annular member 24 and the apply piston 34.

The annular wall member 50 has disposed thereon an annular lip seal 64 which sealingly engages the apply piston 34 and, in conjunction with the lip seal 58, establishes the diametral limits of a feed chamber 66.

The apply piston 34 has an annular face 68 adapted to frictionally engage the annular friction face 40, such that during clutch engagement the annular friction face 38 will frictionally engage the annular member 26, resulting in rotation of the plate member 36 and therefore of the clutch output shaft 46. The apply piston 34 is guided axially in the clutch housing 20 by pins, not shown, which are secured to the annular sheet metal member 24, these pins providing a rotary drive connection between the clutch housing 20 and the apply piston 34.

The apply piston 34 houses a valve member 70 as seen in Figure 1, and also houses a valve member 72 as seen in Figure 2. These valve members 70 and 72 may each be a single valve member, as shown, or they may each have an identical mate disposed diametrically opposite. If the valve members 70 and 72 do not have identical mates disposed diametrically opposite them, it will be necessary to provide weights to ensure dynamic balance.

The valve member 70 includes a valve housing 74 having an opening 76 which is closed by a ball 78. The ball 78 rests in a ball seat constituted by a centrifugal weight 80 which is biased by a coil spring 82 in a direction tending to cause the ball 78 to close the opening 76. The valve housing 74 is disposed in a cylindrical chamber 84 which is in fluid communication by way of a passage 86 with the clutch apply chamber 62.

The valve member 72 includes a valve housing 88 disposed in a cylindrical chamber 90 which is formed in the apply piston 34 and is also in fluid communication, by way of a fluid passage 92, with the clutch apply chamber 62. The valve housing 88 has disposed therein an opening 94 which is in fluid communication with the cylindrical chamber 90 and is adapted to be closed by a ball 96 that is urged into closing relationship with the opening 94 by a coil spring 98.

The radially inner portions of the valve members 70 and 72 are in fluid communication with the annular space 30, which is connected to an exhaust passage, not shown, in a conventional manner. The feed chamber 66 is supplied with pressurized fluid by means of a fluid passage 100 which is supplied by a conventional hydraulic pump 102. Fluid in the feed chamber 66 is communicated through a restricted passage (orifice) 106 to the apply chamber 62.

The pressure level in the fluid passage 100 is established by a conventional variable regulator valve 104. The pressure level established by the regulator valve 104 can be controlled by any of the well-known transmission pressure controls which are responsive to engine torque, vehicle speed, transmission ratio or other engine or vehicle operating parameters. The pressure level may be controlled, for example, to be responsive to engine operating temperature.

Each of the valve members 70 and 72 operates in a generally conventional fashion to control the exhausting of fluid from the apply chamber 62, to thereby establish a speed-responsive variation of the fluid pressure within the apply chamber.

More specifically, the valve members 70 and 72 act as centrifugally responsive valves such that as the speed of rotation increases, the closing force of each valve member likewise increases. The closing force of the valve member 70, due to the large mass of the centrifugal weight 80 forming its ball seat, increases incrementally more rapidly than that of the valve member 72. This is shown in Figure 4, in which curve A has a more rapidly increasing pressure-speed relationship than does curve B, curve A representing the pressure required to open the valve member 70 at any given clutch input speed level and curve B representing the pressure-speed relationship to open the valve member 72. The pressure level established by the valve members 70 and 72 is the pressure level in the apply chamber 62, and thus the clutch apply pressure is determined by the valve members 70 and 72. As clutch input speed increases, clutch apply pressure will likewise increase.

The fluid pressure in the feed chamber 66 operates in the effective area determined by the seals 58 and 64, as previously mentioned, to urge disengagement of the apply piston 34. Therefore the clutch apply force is equal to the pressure in the apply chamber times the apply chamber area minus the pressure in the feed chamber times the feed chamber area minus the effective area of lube pressure which is found in the annular space 30 and operates on an unbalanced area of the apply piston 34. Since the pressure in the feed chamber 66 is substantially constant for a given operating condition and the pressure in the apply chamber 62 is responsive to engine speed, the apply force will increase as engine speed increases, such that clutch engagement will occur at some predetermined engine speed.

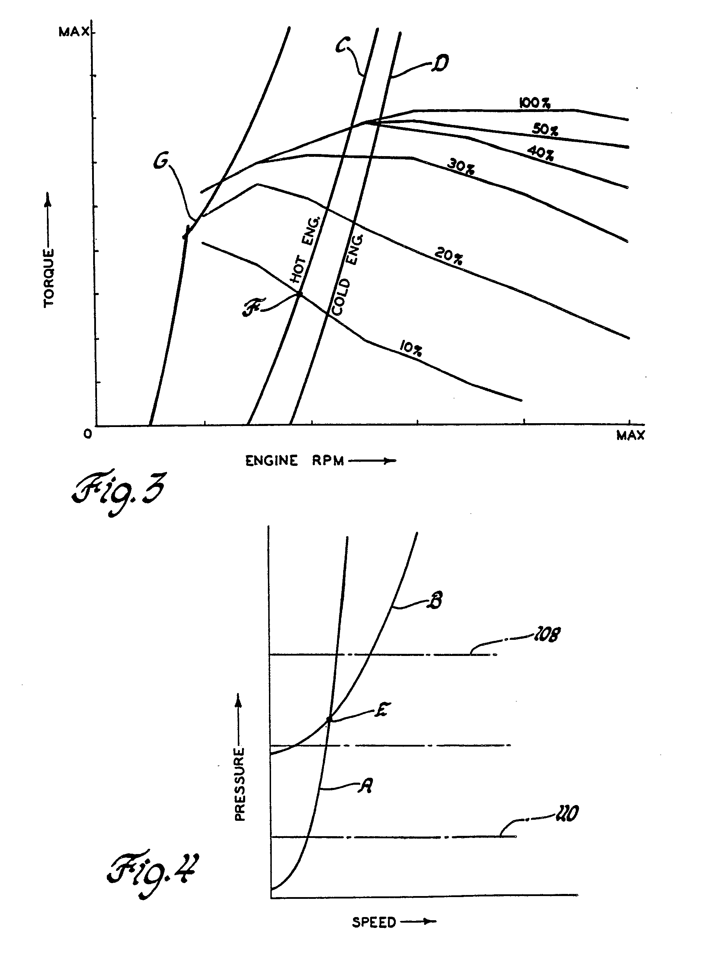

In Figure 3, assuming that the pressure in the feed chamber 66 is at a level consistent with the line 108 in Figure 4, the clutch apply force or clutch torque capacity will follow the curve C, which represents the engaging function desired when the engine is operating at its normal temperature. Curve D represents the engine operating characteristic desired when the engine is cold: this curve is established by slightly increasing the level of pressure in the feed chamber 66.

Under these conditions the valve member 70 is inoperative from a control standpoint, since the initial clutch application pressure is above the crossing point E of curves A and B as shown in Figure 4. In Figure 3, the curves marked as 10% to 100% represent engine torque output for these respective percentages of throttle opening. For example, at 10% throttle the capacity of the clutch is equal to the engine torque output at point F. If the clutch capacity is below this point and the engine throttle is set at 10%, the clutch will slip. If clutch capacity is above this point, the clutch will not slip at 10% throttle. It is clear that the torque capacity must increase as engine throttle percentages increase.

Once the vehicle is moving, it is often desirable to permit coasting with the clutch engaged, or to obtain vehicle operation at low throttle settings without the clutch slipping. To obtain this condition, the pressure level established by the regulator valve 104 is set at the level 110 shown in Figure 4. Such reduction of the pressure level in the feed chamber 66 has the effect of moving the clutch torque capacity curve C in Figure 3 upwardly, such that curve G will be the operating characteristic curve. It is evident from the shape of curve G that both valve members 70 and 72 are operable to provide control of clutch capacity in dependence upon the engine operating speed. Thereby, it is possible to operate the vehicle at road load conditions without clutch slip occurring, so permitting the provision of a slipping clutch function for smooth vehicle acceleration and a completely engaged clutch for normal vehicle operation.

By appropriate control of the pressure level in the feed chamber 66, various torque capacity-engine speed relationship levels can be achieved, such that the clutch can be tailored to a specific engine or vehicle.

The input clutch arrangement which has been described can be utilized with many different types of transmission, such as the planetary gear type, the continuously variable friction belt type, or automatically shifted synchromesh-type transmissions. The present invention has application wherever a slipping-type input clutch can be used.

If required for a particular application, the clutch can be designed to engage at one speed and disengage at another speed by changing the feed pressure level after clutch engagement.

**Claims**

1. A centrifugally responsive hydraulically applied friction clutch, in which an apply piston (34) is slidably disposed in a clutch housing (20) and co-operates therewith to form a feed chamber (66) and an apply chamber (62), and fluid source means (102, 104) is arranged for supplying fluid to the feed chamber (66), characterised in that the apply piston (34) is a differential-area piston, the fluid source means (102, 104) is arranged for supplying fluid at selective pressure levels to the feed chamber (66), passage means (106) connects the feed chamber (66) to the apply chamber (62), first centrifugally responsive valve means (70) is arranged for controlling the exhaust of fluid from the apply chamber (62) to establish a first predetermined speed-pressure relationship in the apply chamber (62) for urging engagement of a friction clutch (32), second centrifugally responsive valve means (72) is arranged for controlling the exhaust of fluid from the apply chamber (62) to establish a second predetermined speed-pressure relationship in the apply chamber (62) for urging engagement of the friction clutch (32), the second centrifugally responsive valve means (72) is constructed to open at a higher initial pressure and to have a less rapidly increasing speed-pressure relationship than the first centrifugally responsive valve means (70), and fluid pressure in the feed chamber (66) is operable to urge disengagement of the friction clutch (32) and is effective to establish the required engagement pressure for the friction clutch (32) in accordance with the pressure level of the fluid source means (102, 104) to thereby determine which of the centrifugally responsive valve means (70 and 72) is to be effective to control initial, low-speed clutch engagement.

2. A centrifugally responsive hydraulically applied friction clutch according to claim 1, characterised in that the apply chamber (62) has an effective area greater than the effective area of the feed chamber (66), the first centrifugally responsive valve means (70) is operable to establish in the apply chamber (62) a static pressure level which is determined by the first speed-pressure relationship and is equal to or less than the pressure level in the feed chamber (66), and the second centrifugally responsive valve means (72) is operable to establish in the apply chamber (62) a static pressure level which is determined by the second predetermined speed-pressure relationship and is equal to or less than the pressure level in the feed chamber (66).

3. A centrifugally responsive hydraulically applied clutch according to claim 1 or 2, characterised in that the fluid source means (102, 104) comprises a source (102, 100) of fluid under pressure and means (104) for changing the pressure level of the fluid supplied from the fluid source means (102, 104), to thereby vary the control of exhaust of fluid from the apply chamber (62) by the first and second centrifugally responsive valve means (70 and 72).

**Patentansprüche**

1. Fliehkraftregulierte hydraulisch betätigte Reibungskupplung, bei der ein Beaufschlagungskolben (34) gleitend in einem Kupplungsgehäuse (20) angeordnet ist und mit diesem zusammenwirkend eine Zuführkammer (66) und eine Beaufschlagungskammer (62) bildet, und Fluidquellenmittel (102, 104) zum Zuführen von Fluid zur Zuführkammer (66) angeordnet sind, dadurch gekennzeichnet, daß der Beaufschlagungskolben (34) ein Differenz-Flächenkolben ist, daß die Fluidquellenmittel (102, 104) zum Zuführen von Fluid bei wahlweisen Druckpegeln zu der Zuführkammer (66) ausgelegt sind, daß Durchlaßmittel (106) die Zuführkammer (66) mit der Beaufschlagungskammer (62) verbinden, daß ein erstes auf Fliehkraft ansprechendes Ventilmittel (70) zum Steuern des Ausleitens von Fluid von der Beaufschlagungskammer (62) ausgelegt ist, um eine erste vorbestimmte Geschwindigkeits/Druck-Beziehung in der Beaufschlagungskammer (62) zur errichten, um eine Reibkupplung (32) in Anlage zu drängen, daß ein zweites auf Fliehkraft ansprechendes Ventilmittel (72) zum Steuern des Ausleitens von Fluid von der Beaufschlagungskammer (62) ausgelegt ist, um eine zweite vorbestimmte Geschwindigkeits/Druck-Beziehung in der Beaufschlagungskammer (62) zu errichten, um die Reibkupplung (32) in Anlage zu drängen, daß das zweite auf Fliehkraft ansprechende Ventilmittel (72) zum Öffnen bei einem höheren Anfangsdruck und für eine weniger rasch ansteigende Geschwindigkeits/Druck-Beziehung als das erste auf Fliehkraft ansprechende Ventilmittel (70) konstruiert ist, und daß Fluiddruck in der Zuführkammer (66) zum Drängen der Reibkupplung (32) in Lösestellung betätigbar ist und zum Errichten des erforderlichen Anlagedruckes für die Reibkupplung (32) entsprechend dem Druckpegel der Fluidquellenmittel (102, 104) wirksam, um dadurch zu bestimmen, welches der auf Fliehkraft ansprechenden Ventilmittel (70 und 72) zum Steuern anfänglicher, Niedriggeschwindigkeits-Kupplungsanlage wirksam sein soll.

2. Fliehkraftregulierte hydraulisch betätigte Reibkupplung nach Anspruch 1, dadurch gekennzeichnet, daß die Beaufschlagungskammer (62) eine wirksame Fläche größer als die wirksame Fläche der Zuführkammer (66) besitzt, daß das erste auf Fliehkraft ansprechende Ventilmittel (70) zum Errichten eines statischen Druckpegels in der Beaufschlagungskammer (62) betätigbar ist, der durch die erste Geschwindigkeits/Druck-Beziehung bestimmt und gleich groß wie oder kleiner als der Druckpegel in der Zuführkammer (66) ist, und daß das zweite auf Fliehkraft ansprechende Ventilmittel (72) zum Errichten eines statischen Druckpegels in der Beaufschlagungskammer (62) betätigbar ist, der durch die zweite vorbestimmte Geschwindigkeits/Druck-Beziehung bestimmt und gleich groß wie oder kleiner als der Druckpegel in der Zuführkammer (66) ist.

3. Fliehkraftregulierte hydraulisch betätigte Kupplung nach Anspruch 1 oder 2, dadurch gekennzeichnet, daß die Fluidquellenmittel (102, 104) eine Quelle (102, 100) von Druckfluid und Mittel (104) zum Ändern des Druckpegels des von den Fluidquellenmitteln (102, 104) zugeführten Fluides umfassen, um dadurch die Steuerung des Ableitens von Fluid von der Beaufschlagungskammer (62) durch das erste und das zweite auf Fliehkraft ansprechende Ventilmittel (70 und 72) zu verändern.

## Revendications

1. Embrayage à friction actionné hydrauliquement, sensible à une force centrifuge, dans lequel un piston d'application (34) est disposé de manière coulissante dans un boîtier d'embrayage (20) et coopère avec celui-ci pour former une chambre d'alimentation (66) et une chambre d'application (62), et une source de fluide (102, 104) est agencée pour alimenter en fluide la chambre d'alimentation (66), caractérisé en ce que le piston d'application (34) est un piston à surface différentielle, la source de fluide (102, 104) est agencée pour alimenter en fluide la chambre d'alimentation (66) à des niveaux de pression sélectifs, des moyens de passage (106) relient la chambre d'alimentation (66) à la chambre d'application (62), un premier clapet (70) réagissant à une force centrifuge est agencé pour commander l'évacuation de fluide de la chambre d'application (62) pour établir une première relation vitesse-pression prédéterminée dans la chambre d'application (62) pour provoquer le serrage d'un embrayage à friction (32), une second clapet (72) réagissant à une force centrifuge est agencé pour commander l'évacuation de fluide de la chambre d'application (62) pour établir une seconde relation vitesse-pression prédéterminée dans la chambre d'application pour provoquer le serrage de l'embrayage à friction (32), le second clapet (72) réagissant à une force centrifuge est conçu pour s'ouvrir à une pression initiale plus élevée et pour avoir une relation vitesse-pression augmentant moins rapidement que le premier clapet (70) réagissant à une force centrifuge, et la pression de fluide dans la chambre d'alimentation (66) peut être commandée pour entrainer un desserrage de l'embrayage à friction (32) et, est efficace pour établir la pression de serrage requise pour l'embrayage à friction (32) en fonction du niveau de pression de la source de fluide (102, 104) déterminant ainsi lequel des clapets (70 et 72) réagissant à une force centrifuge doit agir pour commander un serrage initial à basse vitesse.

2. Embrayage à friction actionné hydrauliquement, à commande centrifuge, selon la revendication 1, caractérisé en ce que la chambre d'application (62) a une surface efficace plus grande que la surface efficace de la chambre d'application (66), le premier clapet (70) réagissant à une force centrifuge peut être actionné pour établir dans la chambre d'application (62) un niveau de pression statique qui est déterminé par la première relation vitesse-pression et qui est égal ou inférieur au niveau de pression dans la chambre d'alimentation (66), et le second clapet (72) réagissant à une force centrifuge peut être actionné pour établir dans la chambre d'application (62) un niveau de pression statique qui est déterminé par la seconde relation vitesse-pression prédéterminée et qui est égal ou inférieur au niveau de pression dans la chambre d'alimentation (66).

3. Embrayage à friction actionné hydrauliquement, à commande centrifuge, selon la revendication 1 ou 2, caractérisé en ce que la source de fluide (102, 104) comprend une source (102, 100) de fluide sous pression et des moyens (104) pour modifier le niveau de pression du fluide provenant de la source de fluide (102, 104), pour faire varier ainsi la commande d'évacuation de fluide de la chambre d'application (62) par les premier et second clapets (70 et 72) réagissant à une force centrifuge.

0 095 258

Fig. 1

Fig. 2

MAX

TORQUE ———————▶

100%
50%
40%
30%

G

HOT ENG.

COLD ENG.

20%

F

10%

0

MAX

ENGINE RPM ———▶

*Fig. 3*

B

108

E

A

PRESSURE ———▶

110

*Fig. 4*

SPEED ———▶